# EUROPÄISCHE PATENTSCHRIFT

(11) **EP 0 723 946 B1**
(45) Veröffentlichungstag und Bekanntmachung des Hinweises auf die Patenterteilung: **18.08.1999**
(21) Anmeldenummer: 96100457.9
(22) Anmeldetag: 13.01.1996
(51) Int. Cl.: C04B 41/48, B05D 5/06, E04F 15/12

(54) **Beschichtungsmaterial mit eingelagerten Teilchen**
Coating material having particles incorporated therein
Matériel de revêtement ayant des particules incorporées

(30) Priorität: 18.01.1995 DE 29500706 U
(43) Veröffentlichungstag der Anmeldung: 31.07.1996
(73) Patentinhaber: COELAN Chemie-Produktionsgesellschaft mbH, 48653 Coesfeld (DE)
(72) Erfinder: Hunkemöller, Paul, D-48653 Coesfeld (DE)
(74) Vertreter: Habbel, Hans-Georg, Dipl.-Ing.

(56) Entgegenhaltungen:
- EP-A- 0 086 626
- EP-A- 0 368 294
- EP-A- 0 693 512

## Beschreibung

Die Erfindung betrifft ein Beschichtungsmaterial nach dem Oberbegriff des Anspruches 1.

Derartige Beschichtungsmaterialien sind beispielsweise aus der EP 86 626 A2 oder aus der EP 368 294 A2 bekannt. Die EP-A-86 626 schlägt vor, mit Hilfe von pigmenthaltigen Quarzsanden eine Färbung des Beschichtungsmaterials zu erreichen, wobei ausdrücklich gerundete kornartige Quarzsandteilchen Verwendung finden sollen, die durch ihre unregelmäßige Lage übereinander eine Oberflächenrauhigkeit des Beschichtungsmaterials zugunsten einer rutschhemmenden Wirkung verursachen.

Die EP-A-368 294 schlägt vor, schwärzende Füllstoffe in einem Kunstharz oder einem Gemisch aus mehreren Kunstharzen vorzusehen, um auf diese Weise eine natursteinartige Farbgebung und Maserung zu erzielen.

Weiterhin ist es aus der Praxis bekannt, Farbpartikel in den zunächst vergossenen Flüssigkunststoff einzustreuen. Dabei ist nachteilig, daß die Handhabung der Farbpartikel schwierig ist und bei mangelnder Erfahrung zu einer ungleichmäßigen Verteilung der Farbpartikel führt, wobei aus ästhetischen Gründen diese Ungleichmäßigkeit störend ist und darüber hinaus bei den ungenügend mit Farbstoffpartikeln abgedeckten Flächen der ursprüngliche Untergrund sichtbar ist.

Bei diesem aus der Praxis bekannten Beschichtungsmaterial ist daher nachteilig, daß dieses ausschließlich von erfahrenen Fachleuten mit Farbstoffpartikeln versehen werden kann, so daß dieses grundsätzlich von Heimwerkem einsetzbare Produkt dem Heimwerker nur einen eingegrenzten Anwendungsspielraum ermöglicht.

Dieser Nachteil betrifft auch das Material gemäß der EP-A-368 294: Auch hier kommt es insbesondere bei der Verwendung von einem Gemisch unterschiedlicher Harze mit unterschiedlichen Färbungen und/oder anderen unterschiedlichen Eigenschaften auf das Fachkönnen des Verarbeiters an, um eine gleichmäßige und ausreichende Schichtdicke beim Auftrag dieses Materials auf ebene Flächen, wie z. B. Fußböden, zu erzielen.

Bei dem Material gemäß der EP-A-86 626 ist nachteilig, daß die ballige Kornstruktur der Quarzsandteilchen eine vergleichsweise große Schichtdicke des aufgetragenen Bodenbelages erfordert, um die darunter liegende alte Oberfläche vollständig abzudekken und unsichtbar zu machen. Zudem kommt es auch hier auf die Fachkenntnis des Verarbeiters an, wenn die gewünschte Oberflächenrauhigkeit erzielt werden soll, ohne die Oberfläche des Bodenbelages zu empfindlich zu machen gegenüber mechanischer Beanspruchung, bei der die vorstehenden Oberflächenspitzen abbrechen könnten.

Der Erfindung liegt die Aufgabe zugrunde, ein gattungsgemäßes Beschichtungsmaterial dahingehend zu verbessern, daß es problemlos von Laien verarbeitet werden kann.

Diese der Erfindung zugrundeliegende Aufgabe wird durch die Ausgestaltung gemäß dem kennzeichnenden Teil des Anspruches 1 gelöst.

Die Erfindung schlägt mit anderen Worten vor, die Farbstoffpartikel als flache Flocken auszubilden. Durch eine natürliche Unregelmäßigkeit in der Verteilung der Flocken ergibt sich eine leicht rauhe oder wellige Oberflächenstruktur der Beschichtung, die eine Rutschfestigkeit ergibt und daher aus Sicherheitsgründen wünschenswert ist. Gleichzeitig ermöglicht die flache Ausbildung der Teilchen die Schichtung mehrerer Teilchen übereinander, wobei in der Praxis die Teilchen versetzt zueinander angeordnet sind, so daß insgesamt eine vollständige optische Abdeckung des Untergrundes möglich ist unter Beibehaltung einer insgesamt niedrigen Dicke der aufgetragenen Beschichtung. Die niedrige Beschichtungsdicke ist vorteilhaft, da sie bei bestehenden Böden keinerlei Veränderungen an den Böden selbst oder an Türen erforderlich macht, und da die Türen kratzfrei über den Boden geführt werden können, auch nachdem dieser beschichtet wurde.

Bei einer entsprechenden Vielzahl farbiger Teilchen wird eine so dichte Teilchenanordnung ermöglicht, daß trotz der Verwendung eines transparenten Flüssigkunststoffes die Beschichtung blickdicht wird, die den Untergrund abdeckt und nicht mehr einsehbar macht.

In Abhängigkeit von dem jeweils verwendeten Flüssigkunststoff kann daher der Hersteller des Beschichtungsmaterials eine Konzentration der farbigen Teilchen im Flüssigkunststoff wählen, die dem Heimwerker eine ausreichende Schichtdicke der Beschichtung dadurch anzeigt, daß der Untergrund nicht mehr sichtbar ist und durch die farbigen Teilchen vollständig verdeckt ist. Auf diese Weise kann nicht nur ein optisch, sondern auch ein technisch hervorragendes Arbeitsergebnis sichergestellt werden, selbst bei Verarbeitung des Beschichtungsmaterials durch eine Laien.

Vorteilhaft können die farbigen Teilchen unterschiedlich eingefärbt sein, so daß sich insgesamt ein farblich unregelmäßiger Eindruck des beschichteten Bodens ergibt. Auf diese Weise wird eine natürliche Unregelmäßigkeit erzielt, die die Verarbeitung des Beschichtungsmaterials durch einen Laien unterstützt: Beispielsweise dort, wo in millimetergroßen Bereichen der Untergrund nicht durch Farbteilchen abgedeckt ist, fallen diese Stellen durch die Mehrfarbigkeit der verwendeten Teilchen nicht auf, so daß kleinere Ungenauigkeiten, wie sie bei der Verarbeitung durch Laien nicht auszuschließen sind, nicht zu optischen Unzulänglichkeiten führen.

Vorteilhaft können die Teilchen einen Durchmesser von 10 mm nicht überschreiten. Bei Versuchen hat sich gezeigt, daß Flokken mit einer Kantenlänge von 2 bis 5 mm so klein sind, daß sie aus normaler Betrachtungshöhe, bei stehenden Personen also, einen insgesamt gleichmäßigen und leicht melierten optischen Eindruck der Bodenoberfläche vermitteln. Darüber hinaus richten sich derartige klein Flocken problemlos in der auf den Boden aufgetragenen Beschichtungsmasse horizontal aus und legen sich knickfrei und faltenfrei übereinander, so daß die Qualität und Stabilität der Beschichtung hohen Anforderungen entspricht.

Vorteilhaft weisen die farbigen Teilchen ein spezifisches Gewicht auf, welches dem des Flüssigkunststoffes etwa entspricht. Hierdurch wird gewährleistet, daß bei der Lagerung und beim Transport des Beschichtungsmaterials keine starke Sedimentation der Teilchen im Flüsigkunststoff stattfindet, so daß dementsprechend vor der Verarbeitung des Beschichtungsmaterials keine intensive Durchmischung des Materials erforderlich ist, welche bei Verarbeitung durch einen Laien ansonsten ggf. nicht immer in ausreichendem Maße sichergestellt werden kann.

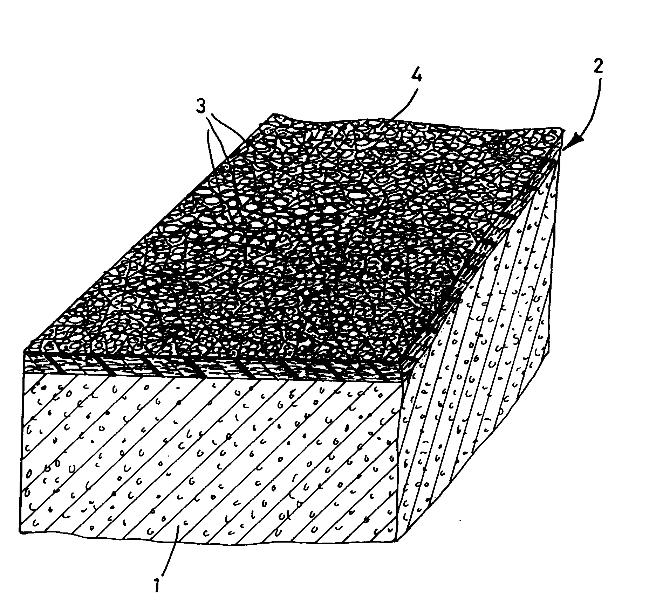

Ein Ausführungsbeispiel der Erfindung wird anhand der Zeichnung im folgenden näher erläutert.

Dabei ist mit 1 ein Boden bezeichnet, der beispielsweise aus Beton oder aus Kacheln bestehen kann. Auf den Boden 1 ist ein Beschichtungsmaterial 2 aufgetragen, welches eine Vielzahl von farbigen Teilchen 3 umfaßt, die als farbige Flocken unterschiedlicher Farben ausgebildet sind. So können z. B. weiße, graue und schwarze Flocken vorgesehen sein, die der Beschichtung insgesamt einen melierten optischen Charakter verleihen. Die Einbringung metallisch glänzender und reflektierender Flocken ist ebenso möglich, wie eine ausgeprägt farbige Gestaltung des Beschichtungsmaterials 2 durch die Verwendung entsprechend eingefärbter Teilchen 3.

Die Teilchen 3 sind in einem Flüssigkunststoff 4 eingebunden, der an sich als Bodenbeschichtungsmasse bekannt ist. Der Flüssigkunststoff 4 ist transparent und läßt grundsätzlich den Blick auf den Boden 1 zu. Der Laie kann eine ausreichende Dicke der Beschichtung daran erkennen, daß der Boden 1 nach dem Auftrag des Beschichtungsmaterials 2 nicht mehr sichtbar ist, sondern von Teilchen 3 und damit von dem gesamten Beschichtungsmaterial 2 blickdicht abgedeckt ist. Millimetergroße Flächen, die nicht durch Teilchen 3 abgedeckt sind, sondern nach wie vor den Blick auf den Boden 1 durch den transparenten Flüssigkunststoff 4 zulassen, fallen in der Praxis aufgrund der unregelmäßigen optischen Gestaltung des Beschichtungsmaterials 2 nicht auf.

Selbstverständlich kann der Flüssigkunststoff 4 neben farbloser Ausbildung auch eingefärbt transparent vorliegen, so daß auch hierdurch eine farbliche Gestaltung der Beschichtung möglich ist. Auch bei eingefärbtem transparenten Flüssigkunststoff 4 ergeben sich die Vorteile, daß die Schichtdicke des Beschichtungsmaterials auf dem Boden 1 durch eine blickdichte Anordnung genügend vieler Teilchen 3 über den Boden 1 als Indikator für einen Laien genutzt werden kann.

Versuche haben gezeigt, daß bei Zugabe von 40 Gew.- % farbiger Flocken zu 100 Gew.-% des Flüssigkunststoffes eine Teilchendichte in der gesamten Beschichtungsmasse erzielt wurde, die bei dem verwendeten Flüssigkunststoff die geforderte Mindestschichtdicke dann sicherstellte, wenn eine vollkommene optische Abdeckung des Bodens durch die Beschichtungsmasse erkennbar war.

Grundsätzlich sind anstelle der dargestellten farbigen Flocken auch andere farbige oder undurchsichtige Teilchen möglich. Vorteilhaft weisen diese ein spezifisches Gewicht auf, welches dem des verwendeten Flüssigkunststoffes 4 etwa entspricht, so daß nahezu automatisch eine homogene Verteilung der Teilchen 3 im Beschichtungsmaterial sichergestellt ist.

## Patentansprüche

1. Beschichtungsmaterial für Bodenflächen, bestehend aus einem transparenten vergießbaren Flüssigkunststoff (4), wobei der Flüssigkunststoff (4) eine Vielzahl von farbigen Teilchen (3) enthält, dadurch gekennzeichnet, daß die Teilchen (3) als flache Flocken ausgebildet sind.

2. Beschichtungsmaterial nach Anspruch 1, dadurch gegekennzeichnet, daß der Flüssigkunststoff (4) Teilchen (3) unterschiedlicher Farben enthält.

3. Beschichtungsmaterial nach Anspruch 1, dadurch gekennzeichnet, daß die Teilchen (3) einen Durchmesser von 10 mm nicht überschreiten.

4. Beschichtungsmaterial nach einem der vorhergehenden Ansprüche, dadurch gekennzeichnet, daß das spezifische Gewicht der farbigen Teilchen (3) dem des Flüssigkunststoffes (4) entspricht oder nur geringfügig von diesem abweicht.

5. Beschichtungsmaterial nach einem der vorhergehenden Ansprüche, dadurch gekennzeichnet, daß der Anteil der farbigen Teilchen (3) in Abhängigkeit vom Material des verwendeten Flüssigkunststoffes (4) so bemessen ist, daß bei einer optischen Abdeckung des Bodens (1) mit dem Beschichtungsmaterial die für den verwendeten Flüssigkunststoff (4) erforderliche Mindestschichtdicke erzielt ist.

6. Beschichtungsmaterial nach Anspruch 5, gekennzeichnet durch ein Verhältnis von 40 Gewichtsteilen der farbigen Teilchen (3) auf 100 Gewichtsteile des Flüssigkunststoffes (4).

## Claims

1. Coating material for floor surfaces, comprising a transparent castable liquid plastic (4), the liquid plastic (4) containing a multiplicity of coloured particles (3), characterized in that the particles (3) are formed as flat flakes.

2. Coating material according to Claim 1, characterized in that the liquid plastic (4) contains particles (3) of different colours.

3. Coating material according to Claim 1, characterized in that the particles (3) do not exceed a diameter of 10 mm.

4. Coating material according to one of the preceding claims, characterized in that the relative density of the coloured particles (3) corresponds to that of the liquid plastic (4) or deviates only slightly from it.

5. Coating material according to one of the preceding claims, characterized in that the proportion of coloured particles (3) is set in relation to the material of the liquid plastic (4) used such that the minimum layer thickness required for the liquid plastic (4) used to provide visual coverage of the floor (1) with the coating material is achieved.

6. Coating material according to Claim 5, characterized by a ratio of 40 parts by weight of the coloured particles (3) to 100 parts by weight of the liquid plastic (4).

## Revendications

1. Matériau de revêtement pour sols, constitué d'un plastique liquide transparent (4) pouvant être coulé, le plastique liquide (4) contenant un grand nombre de particules colorées (3), caractérisé en ce que les particules (3) sont configurées comme des flocons plats.

2. Matériau de revêtement selon la revendication 1, caractérisé en ce que le plastique liquide (4) contient des particules (3) ayant des couleurs différentes.

3. Matériau de revêtement selon la revendication 1, caractérisé en ce que les particules (3) ne dépassent pas un diamètre de 10 mm.

4. Matériau de revêtement selon l'une des revendications précédentes, caractérisé en ce que la densité des particules colorées (3) correspond à celle du plastique liquide (4) ou ne s'en écarte que peu.

5. Matériau de revêtement selon l'une des revendications précédentes, caractérisé en ce que la proportion des particules colorées (3) par rapport au matériau du plastique liquide utilisé (4) est définie de façon que, quand le matériau de revêtement assure un recouvrement optique du sol (1), on arrive à l'épaisseur minimale de couche nécessaire au plastique liquide utilisé (4).

6. Matériau de revêtement selon la revendication 5, caractérisé par un rapport de 40 parties en poids des particules colorées (3) pour 100 parties en poids du plastique liquide (4).
